(19)

**Europäisches Patentamt**
**European Patent Office**
**Office européen des brevets**

(11) **EP 4 425 173 B1**

(12) **EUROPEAN PATENT SPECIFICATION**

(45) Date of publication and mention
of the grant of the patent:
**11.02.2026 Bulletin 2026/07**

(21) Application number: **24159942.2**

(22) Date of filing: **27.02.2024**

(51) International Patent Classification (IPC):
***G01N 30/86*** (2006.01)

(52) Cooperative Patent Classification (CPC):
**G01N 30/8658; G01N 30/8693;** G01N 2030/8813

(54) **METHODS AND SYSTEMS FOR CONTROL AND OPTIMIZATION OF CONTINUOUS
CHROMATOGRAPHY PROCESS**

VERFAHREN UND SYSTEME ZUR STEUERUNG UND OPTIMIERUNG EINES
KONTINUIERLICHEN CHROMATOGRAPHIEVERFAHRENS

PROCÉDÉS ET SYSTÈMES DE COMMANDE ET D'OPTIMISATION D'UN PROCESSUS DE
CHROMATOGRAPHIE CONTINUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2023 IN 202321014227**

(43) Date of publication of application:
**04.09.2024 Bulletin 2024/36**

(73) Proprietor: **Tata Consultancy Services Limited
Maharashtra (IN)**

(72) Inventors:
• **BUDDHIRAJU, Venkata Sudheendra
411013 Pune, Maharashtra (IN)**
• **RUNKANA, Venkataramana
411013 Pune, Maharashtra (IN)**
• **PREMRAJ, Karundev
560 009 Bangalore, Karnataka (IN)**
• **SAHU, Swati
411 057 Pune, Maharashtra (IN)**
• **MASAMPALLY, Vishnu Swaroop JI
500081 Hyderabad, Telangana (IN)**

(74) Representative: **Goddar, Heinz J.
Boehmert & Boehmert
Anwaltspartnerschaft mbB
Pettenkoferstrasse 22
80336 München (DE)**

(56) References cited:
• **NIKITA SAXENA ET AL: "AI-ML applications in
bioprocessing: ML as an enabler of real time
quality prediction in continuous manufacturing
of mAbs", COMPUTERS & CHEMICAL
ENGINEERING, PERGAMON PRESS, OXFORD,
GB, vol. 164, 3 July 2022 (2022-07-03),
XP087129131, ISSN: 0098-1354, [retrieved on
20220703], DOI: 10.1016/
J.COMPCHEMENG.2022.107896**
• **NIKITA SAXENA ET AL: "Reinforcement learning
based optimization of process chromatography
for continuous processing of
biopharmaceuticals", CHEMICAL ENGINEERING
SCIENCE, OXFORD, GB, vol. 230, 26 September
2020 (2020-09-26), XP086398851, ISSN:
0009-2509, [retrieved on 20200926], DOI: 10.1016/
J.CES.2020.116171**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**EP 4 425 173 B1**

**Description**

CROSS-REFERENCE TO RELATED APPLICATIONS AND PRIORITY

The present application claims priority from Indian patent application, Application No. 202321014227, filed in India on March 02, 2023.

TECHNICAL FIELD

The disclosure herein generally relates to the field of chromatography, and, more particularly, to control and optimization of continuous chromatography process.

BACKGROUND

In present scenario, biotherapeutic industry has been gaining momentum with increased use of biotherapeutic products in multiple industries. One of the major biotherapeutic product is monoclonal antibodies (mAbs). In general, a final monoclonal antibody (mAb) product is a mixture of its charge variants. However, these charge variants are known to impact biological activity of the product. Therefore, continuous monitoring of concentrations of charge variants is on high priority. Conventionally, these charge variants, in general, are separated by ion-exchange chromatography. However, difference in charges among these charge variants is so small that the separation of these charge variants from the product is non-trivial. Further, ensuring that the composition of these charge variants in commercial grade product are within stated product specifications is also a challenging task. In case of continuous biopharmaceutical manufacturing, there is an additional challenge to achieve charge variant composition in elute for an entire duration of continuous chromatography campaign. Document D1 (Nikita Saxena et al., " AI-ML applications in bioprocessing: ML as an enabler of real time quality prediction in continuous manufacturing of mAbs", Computers & Chemical Engineering, vol. 164, 107896, 3 July 2022, ISSN: 0098-1354, DOI: 10.1016/J.COMPCHEMENG.2022.107896) discloses application of different ML techniques for predicting critical process attributes that are pertinent to capture and polishing chromatography. Data from pH, UV, and conductivity sensors are acquired and pre-processed. For D1, tree-based regression techniques (decision tree and random forest) outperformed in all cases. The final model, random forest regression model, resulted in prediction errors of <5% for all predicted attributes. The results showed that random forest models exhibit optimal performance for smaller process-scale datasets with low chances of overfitting, are computationally inexpensive and do not require a graphics processing unit. The approach of D1 is well suited for implementation in a continuous mAb train for real time prediction of chromatography process attributes. Document D2 (Nikita Saxena et al., "Reinforcement learning based optimization of process chromatography for continuous processing of biopharmaceuticals updates", Chemical Engineering Science Volume 230, 116171, 26 September, ISSN: 0009-2509, DOI: 10.1016/J.CES.2020.116171) discloses an approach based on reinforcement learning (RL), wherein a maximization problem is formulated for cation exchange chromatography for separation of charge variants by optimization of the process flowrate. Chromatography analysis and design toolkit have been used for process simulation and the optimum flow rate at which the yield is maximum and purity constraints are satisfied has been estimated based on the reward policy of RL.

SUMMARY

Embodiments of the present disclosure present technological improvements as solutions to one or more of the above-mentioned technical problems recognized by the inventors in conventional systems. For example, in one embodiment, a method for control and optimization of a continuous chromatography process is provided according to claim 1.

In another aspect, an apparatus for control and optimization of a continuous chromatography process is provided according to claim 6.

In yet another aspect, a non-transitory computer readable medium for control and optimization of a continuous chromatography process is provided according to claim 11.

According to the invention, the one or more hardware processors are configured to optimize, a set of manipulated variables from a set of optimization input data in accordance with a targeted specification of the plurality of charge variants of the plurality of components using a control and optimization model, wherein the set of optimization input data comprises (i) the predicted value of the one or more quality attributes, and (ii) the plurality of preprocessed data; and dynamically modify, the control and optimization model when a deviation between an estimated trajectory of the set of manipulated variables and a reference trajectory exceeds a second predefined threshold.

In accordance with an embodiment of the present disclosure, the plurality of real time data is obtained from one or more online analytical instruments.

According to the invention, optimized set of manipulated variables is recommended to the continuous chromatography system to optimize the chromatography process for achieving the targeted specification of the plurality of charge variants of the plurality of components.

According to the invention, the optimized set of manipulated variables are obtained by performing at least one of (i) a static optimization and (ii) a dynamic optimization.

In accordance with an embodiment of the present disclosure, the trajectory of the set of manipulated variables is estimated for a time period of a control and prediction horizon.

In accordance with an embodiment of the present disclosure, the control and optimization model is dynamically modified by performing at least one of (i) modifying an objective function, (ii) changing values of one or more constraints, (iii) re-estimating one or more tolerances, convergence criteria and one or more relevant parameters of optimization algorithm, and (iv) choosing a different optimization algorithm.

In accordance with an embodiment of the present disclosure, the one or more hardware processors are configured to monitor, one or more properties of a chromatography column using a material condition tracking module; and determine a remaining lifetime of one or more materials in the chromatography column and recommending one or more corrective actions to the continuous chromatography system based on the monitored one or more properties.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of an apparatus implementing a control unit of a continuous chromatography system for control and optimization of continuous chromatography process, in accordance with an embodiment of present disclosure.

FIG. 2 is a detailed functional block diagram elaborating architecture of of the apparatus of FIG. 1 implementing a control unit of a continuous chromatography system for control and optimization of continuous chromatography process according to the present disclosure.

FIG. 3 illustrates an exemplary flow diagram illustrating a method for control and optimization of continuous chromatography process in accordance with the **present disclosure.**

FIGS. 4A through 4D depict graphical representations illustrating a comparison of simulated elution charge variants profiles of Acid, Main, Base 1 and Base 2 species respectively with an experimental value in accordance with some embodiments of the present disclosure.

FIG. 5 illustrates an exemplary block diagram showing inputs and outputs of prediction model and control and optimization model respectively in accordance with some embodiments of the present disclosure.

FIG. 6 illustrates an exemplary block diagram showing inputs and outputs of a material condition tracker in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein. The scope of the invention is defined by the appended claims.

A continuous chromatography campaign consists of continuous capture chromatography and continuous polishing chromatography. Objective of continuous capture chromatography is to separate required protein from cell debris and unwanted impurities of a product (e.g., biotherapeutic product). However, the product from continuous capture chromatography still needs further purification from product related impurities such as charge variants. These charge related impurities are closely related to main product and hence they co-elute along with the main product during continuous capture chromatography (alternative referred as Protein A Chromatography) stage. Therefore, this product is subjected to further purification using continuous polishing chromatography (alternatively referred as Cation Exchange chromatography or CEX). Surge tanks are used to feed feed-solution to the continuous capture chromatography and to store the product from continuous capture chromatography before feeding it to continuous polishing chromatography.

The profitability of the continuous chromatography campaign depends on key performance indicators (KPIs) such as product yield, purity, productivity, capacity utilization and time of operation. The KPIs in the continuous chromatography campaign depend on various key process parameters such as feed composition, superficial velocities maintained during load, wash, elute operations and durations of the distinct stages present in multi-column operations. On the other hand, levels in surge tanks add further complexity in scheduling various distinct stages in multi-column operations. The mode of operation at continuous polishing chromatography depends on the product obtained from continuous capture chromatography and hence there is a complex play of interdependency among these two operations.

Embodiments of the present disclosure provide control and optimization of continuous chromatography process. In the present disclosure, the continuous chromatography campaign is optimized by considering the complex interplay among the two chromatography operations and surge tanks. In general, productivity is considered as a key performance indicator for this operation as the separation of charge variants is not considered in the continuous capture chromatography. However, the purity or composition of continuous capture chromatography elute affects the purity, yield and time of operation at continuous polishing chromatography. Therefore, the present disclosure optimizes (i) the superficial velocities maintained during load, wash, and elute operations, and (ii) the durations of the distinct stages at continuous capture chromatography operations and continuous polishing chromatography operations. The optimization is performed so that overall productivity and capacity utilization is maximized, and time of operations is minimized. This leads to maintaining a target purity and yield while maintaining the practical levels of solutions in the surge tanks. In other words, the method of the present disclosure helps controlling the composition of charge variants in the product. The presents disclosure comprises a data-pre-processing step followed by prediction of process parameters using soft sensor and prediction models. The chromatography process is optimized to achieve targeted purity and yield by recommending optimal values of manipulated variables.

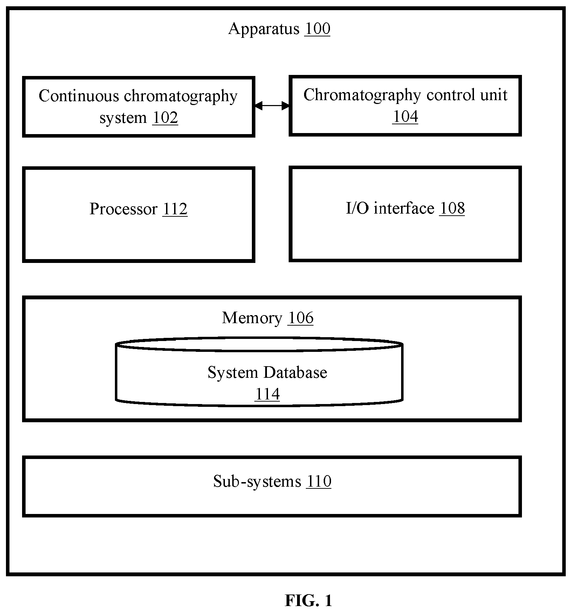

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates a block diagram of an apparatus 100 implementing a control unit 104 of a continuous chromatography system 102 for control and optimization of continuous chromatography process, in accordance with an embodiment of present disclosure.

In an embodiment, the apparatus 100 includes one or more hardware processors 112, communication interface device(s) or input/output (I/O) interface(s) 108 (also referred as interface(s)), one or more sub-systems 110, and one or more data storage devices or memory 106 operatively coupled to the one or more hardware processors 112. The one or more sub-systems 110 may include chromatography unit automation systems. The chromatography unit automation systems control pool start time, pool end time and sample loading of chromatography columns.

The one or more processors 112 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the apparatus 100 can be implemented in a variety of computing systems, such as laptop computers, notebooks, hand-held devices, workstations, mainframe computers, servers, a network cloud and the like.

The I/O interface device(s) 108 can include a variety of software and hardware interfaces, for example, a web interface, a graphical user interface, and the like and can facilitate multiple communications within a wide variety of networks N/W 5 and protocol types, including wired networks, for example, advanced DCS, PLCs, LAN network setup, Python layer with user interface, cable, etc., and wireless networks, such as WLAN, cellular, or satellite. Interfacing is accomplished through PYTHON middleware that passes information from one module to another. In an embodiment, the I/O interface device(s) can include one or more ports for connecting a number of devices to one another or to another server. In an embodiment, the server could be an Open Platform Communications (OPC) server which communicates between the one or more sub-systems 110 and the chromatography control unit 104.

The memory 106 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, a system database 114 is comprised in the memory 106, wherein the system database 114 further comprises a chromatography knowledge database, a chromatography model repository, and a plurality of sub-databases. The memory 106 further comprises (or may further comprise) information pertaining to input(s)/output(s) of each step performed by the systems and methods of the present disclosure. In other words, input(s) fed at each step and output(s) generated at each step are comprised in the memory 106 and can be utilized in further processing and analysis.

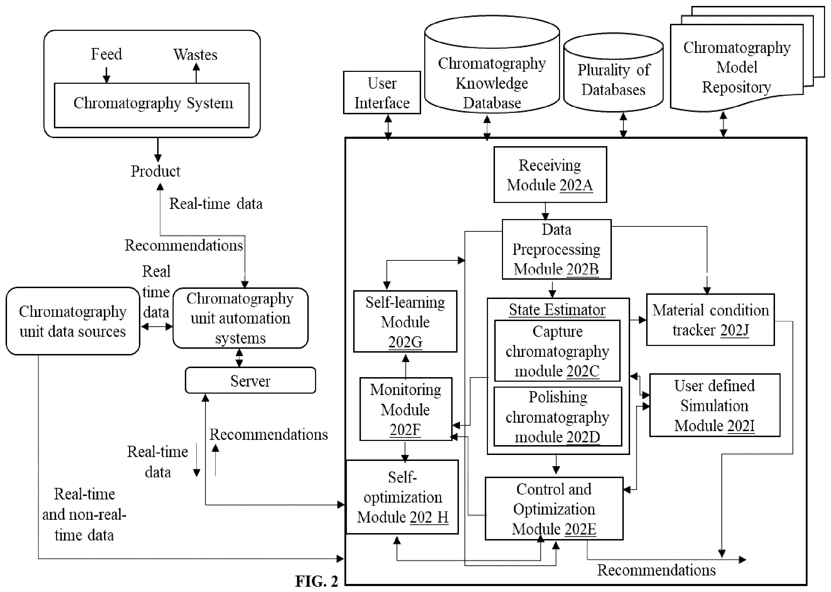

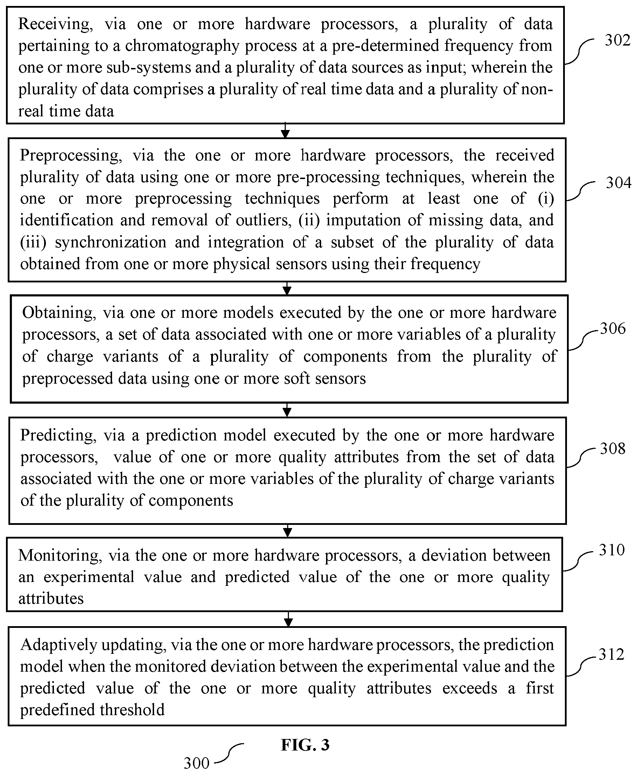

FIG. 2, with reference to FIG. 1, is a detailed functional block diagram elaborating architecture of the apparatus 100 of FIG. 1 implementing a control unit of a continuous chromatography system for control and optimization of continuous chromatography process according to some embodiments of the present disclosure. The continuous chromatography system 102 as shown in FIG. 1 and FIG. 2 comprises of a capture chromatography, surge tank, polishing chromatography, and pumping equipment. The capture chromatography and the polishing chromatography works under a principle of affinity and ion exchange chromatography respectively. The control unit 104 (interchangeably referred as chromatography control unit throughout the description) is configured to process and analyze the acquired data in accordance with one or more modules 202 such as a receiving module 202A, a data preprocessing module 202B, a capture chromatography module (interchangeably referred as soft sensor module throughout the description) 202C, a polishing chromatography module (interchangeably referred as prediction module throughout the description) 202D, a control and optimization module 202E, a monitoring module 202F, a self-learning module 202G, a self-optimization module 202H, a user defined simulation module 202I, and a material condition tracker (interchangeably referred as a resin health and aging monitoring module) 202J, further explained in conjunction with FIG. 2 and FIG 3. The chromatography knowledge database comprises reference data of a set of manipulated variables such as pool start time and end time, data related to calibration profile for detectors, and prediction horizon values for the self-optimization module 202H. The chromatography model repository comprises one or more models such as physics based and data-based models used by the soft sensing module 202C, and the prediction module 202D. Also, the chromatography model repository comprises data regarding various control and optimization models used by the control and optimization module 202E. The plurality of sub-databases comprise historical data related to chromatography process and information regarding chromatography column design, material properties and/or the like.

FIG. 3, with reference to FIGS. 1-2, an exemplary flow diagram illustrating a method 300 for control and optimization of continuous chromatography process, using the apparatus 100 of FIG. 1, in accordance with an embodiment of the present disclosure.

Referring to FIG. 3, in an embodiment, the apparatus(s) 100 comprises one or more data storage devices or the memory 106 operatively coupled to the one or more hardware processors 112 and is configured to store instructions for execution of steps of the method by the one or more processors 112. The steps of the method 300 of the present disclosure will now be explained with reference to components of the apparatus 100 of FIG. 1, the block diagram of FIG. 2, the flow diagram as depicted in FIG. 3 and one or more examples. In an embodiment, at step 302 of the present disclosure, the one or more hardware processors 112 are configured to receive a plurality of data pertaining to a chromatography process at a pre-determined frequency from one or more sub-systems and a plurality of data sources as input. The plurality of data comprises a plurality of real time data and a plurality of non-real time data.

The plurality of data sources include chromatography unit data sources that transmits real time and non-real time data from the continuous chromatography system, one or more physical sensors, the chromatography knowledge database, the chromatography model repository, and the plurality of sub-databases. The one or more sub-systems provide real time data obtained from the continuous chromatography system 102 to the chromatography control unit 104 via the server. The received plurality of data may comprise but not limited to real time values from online analytical instruments such as online high-performance liquid chromatography (HPLC), UV detector, pH detector and conductivity detector or non-real time data from laboratory experiments, operating conditions such as column dimensions, buffer properties, resin properties, breakthrough or elution profiles, pressure drop in the chromatography column, s, feed properties, and/or the like.

In an embodiment, at step 304 of the present disclosure, the one or more hardware processors 112 are configured to preprocess the received plurality of data using one or more pre-processing techniques in real time. The one or more preprocessing techniques perform at least one of (i) identification and removal of outliers, (ii) imputation of missing data, and (iii) synchronization and integration of a subset of the plurality of data obtained from the one or more physical sensors using their frequency. The identification and removal of outliers is performed using distance and density of data points and a statistical model is used to predict the probability of data distribution. The imputation of missing data is performed using mean, median, most-frequent, KNN algorithm or a constant value.

The step 304 is further illustrated and better understood by way of following exemplary explanation.

Generally, data from sensors in a manufacturing plant, is noisy and may contain outliers and anomalies. In some cases, malfunctioning sensors may provide impractical values too. These measurements require pre-processing to utilize them for practical utilization such as soft-sensor predictions, and/or the like. The pre-processing of data comprises identification and removal of outliers, imputation of missing data, and synchronization and integration of the data obtained from various sensors using their frequency. Complexity in frequency of measurement and integration of data from sensors with different frequency arrives due to data being collected from various data sources such as Enterprise Resource Planning (ERP), Laboratory Information Management Systems (LIMS), and/or the like. Sampling frequency of real-time and non-real-time data may be unified to, for example, once every 1 min, where the real-time data is averaged as necessary, and the non-real-time data is interpolated or replicated as necessary. The data pre-processing module 204A identifies variation in incoming data by comparing it with the reference data or historical data available in the plurality of sub-databases. For example, the data coming from Ultraviolet, pH or conductivity detectors at column effluent is verified for noise. The noise in the data is estimated by calculating a signal to noise ratio and comparing it with the historical data. The data pre-processing module 202A uses smoothing filters such as Gaussian and Savitzky-Golay filters for noise reduction.

Noise reduction is performed until the signal to noise ratio is reduced to an acceptable limit. Parameter for smoothing filter is selected based on the historical data or pilot experiment data available in the plurality of sub-databases. Similarly, missing data points are interpolated using suitable profiles such as cubic splines.

Further, at step 306 of the present disclosure, the one or more hardware processors 112 are configured to obtain a set of data associated with one or more variables of a plurality of charge variants of a plurality of components from the plurality of preprocessed data using one or more soft sensors using one or more models. The one or models are stored in the model repository. The plurality of simulated data is the data that is not generated by the one or more physical sensors of the manufacturing plant.

In the context of the present disclosure, the plurality of components include biotherapeutic products such as monoclonal antibodies and their byproducts obtained after the Cation Exchange chromatography (CEX). The set of data associate with the one or more variables of the plurality of charge variants of the plurality of components may include but not limited to breakthrough curve of capture chromatography and concentration of components. In other words, the one or more soft sensors are comprised in the soft-sensing module 202C and obtain simulated data that is not generated by the one or more physical sensors of the manufacturing plant. The plurality of simulated data is used along with the plurality of preprocessed data for control and monitoring purposes. The continuous chromatography process is combined with the online high performance liquid chromatography (HPLC) for monitoring of the plurality of charge variants such as acidic, main and basic of protein load. Specificity and detailed information about composition of each charge variant from the plurality of charge variants is converted to a concentration data which is used for predicting breakthrough curve for Periodic counter-current chromatography (PCC) protein chromatography. The breakthrough curve is used to determine a variation in concentration of charge variants of a capture chromatography elute. The one or more soft sensors also have a capability of calculating concentration from the UV detector if required. For example, if protein A chromatography uses the UV detector for determining the breakthrough point, the signal from the UV detector is converted to concertation value of the components using a calibration curve. Based on the type of detector used, the one or more soft sensors select an appropriate calibration curve from the chromatography knowledge database. Similarly, if conductivity detector is connected to the chromatography column for detecting salt ions such as Na+, the signal from conductivity detector is converted to corresponding concentration value.

Referring to FIG. 3, at step 308 of the present disclosure, the one or more hardware processors 112 are configured to predict a value of one or more quality attributes from the set of data associated with the one or more parameters of the plurality of charge variants of the plurality of components using a prediction model. The one or more quality attributes may include but not limited to column efficiency, peak asymmetry, resolution and tailing factor of elution profile of each charge variant from the plurality of charge variants of the plurality of components. From the breakthrough curve of the capture chromatography, composition of different charge components at the capture chromatography elute (i.e., CEX load) is determined. This concentration data of components in CEX load are used as input to the prediction model. The prediction model is obtained using the prediction module 202D which is configured to use a selected model (i.e. prediction model) from the model repository for prediction of the one or more quality attributes (also referred as critical quality attributes (CQA)). The prediction model receives inputs from the data preprocessing module 202 B and the soft-sensing module 202C. The input data received by the prediction model may include but not limited to concentration data of CEX load from soft-sensor, chromatography column dimensions, resin properties, superficial velocity and/or the like.

The prediction model is further better understood by way of the following description provided as exemplary explanation.

Mass transfer dynamics in ion-exchange chromatography column is modelled using a comprehensive general rate model. This model accounts for transport of solute molecules via convection and axial dispersion in column interstitial and via film and pore diffusion across stagnant film around the resin particles and within the packed spherical porous resin particles, respectively as shown in equation (1) and equation (2 below:

$$\frac{\partial C_i}{\partial t} = -u\frac{\partial C_i}{\partial z} + D_{ax,i}\frac{\partial^2 C_i}{\partial z^2}\frac{1-\varepsilon_C}{\varepsilon_C}\frac{3}{r_P}k_{f,i}\big(C_i - C_{P,i}|r = R_P\big) \quad (1)$$

$$\frac{\partial C_{P,i}}{\partial t} = D_{P,i}\left(\frac{\partial^2 C_{P,i}}{\partial r^2} + \frac{2}{r}\frac{\partial C_{P,i}}{\partial r}\right) - \frac{1-\varepsilon_P}{\varepsilon_P}\frac{\partial q_i}{\partial t} \quad (2)$$

Here $C_i$ (mol/m³) and $C_{P,i}$ (mol/m³) denote solute concentration in mobile phase within column interstitials and pores of porous resin particles of radius $R_P$ (m), respectively, and $q_i$ (mol/m³ of resin) is the stationary phase concentration of solute i. Furthermore, $u$ (m/s) denotes the interstitial velocity, $D_{ax,i}$ (m²/s) the axial dispersion coefficient, $k_{f,i}$ (m/s) the film diffusion coefficient, and $D_{P,i}$ (m²/s) the pore diffusion coefficient, respectively. Whereas denote $\varepsilon_C$ and $\varepsilon_P$ external and internal porosity, respectively. $t$ (s) and $z$ (m) denote co-ordinates of time and column axis, respectively. The concentration profiles of elute are obtained using above mentioned general rate model. The parameters used in the model such as $D_{ax,i}$, $k_{f,i}$ (m/s),

$D_{P,i}$, $\varepsilon_C$ and $\varepsilon_P$ are obtained by using parameter estimation techniques utilizing historical data. Although models such as general rate model explains the physics behind the chromatography operations, empirical models are used for real-time predictions. Therefore, other simple models such as empirical or data-based models are also used as the prediction models to estimate the elution profiles. These data-based models are trained using historical data.

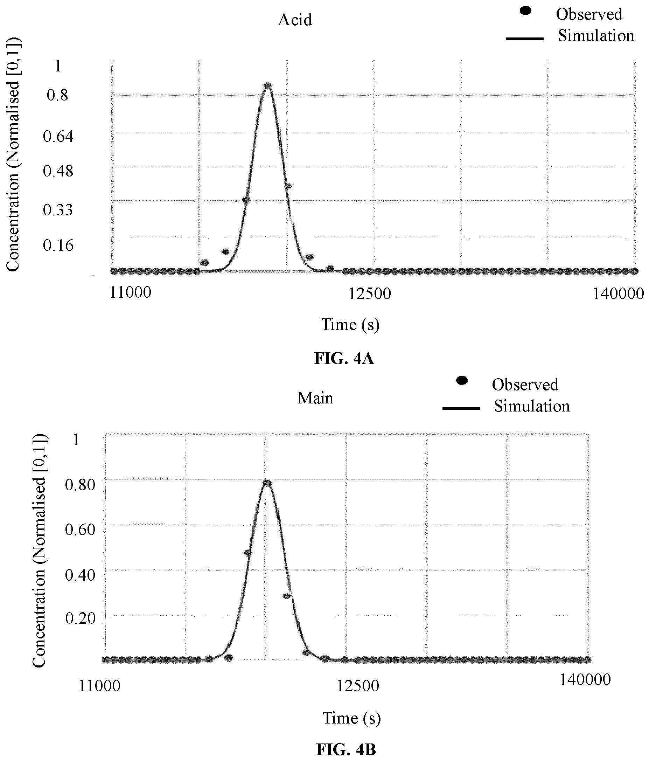

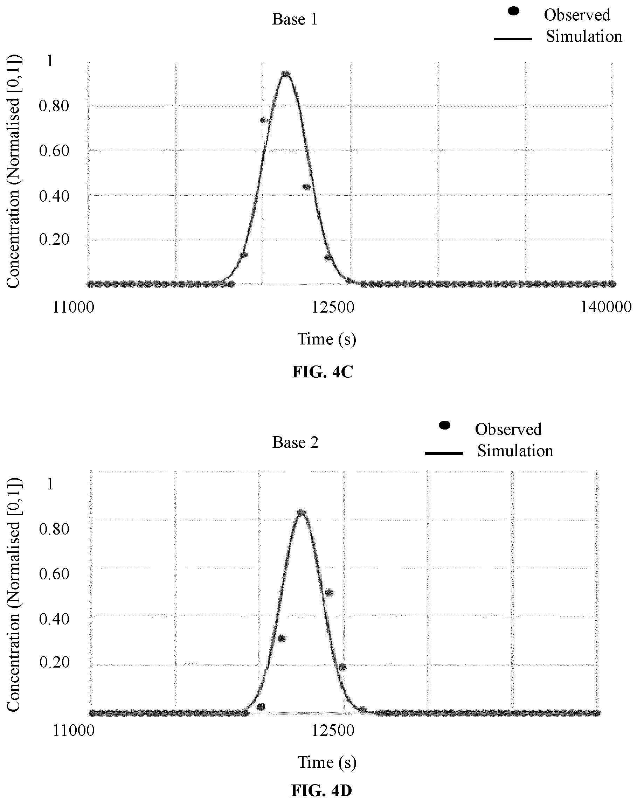

Further, at step 310 of the present disclosure, the one or more hardware processors 112 are configured to monitor a deviation between an experimental value and predicted value of the one or more quality attributes. In an embodiment, a comparison of the predicted values of the one or more quality attributes and values of the one or more quality attributes obtained using experiments is performed using the monitoring module. The monitoring module verifies accuracy with which the prediction model determined the elution profile by comparing the determined elution profile with an experimental elution profile. FIGS. 4A through 4D depict graphical representations illustrating a comparison of simulated elution charge variants profiles of Acid, Main, Base 1 and Base 2 species respectively with an experimental value in accordance with some embodiments of the present disclosure. The graphical representations are time-based plots which show the rate of material being carried out of the chromatography column by an eluent or buffer agent. As shown in FIGS. 4A through 4D, the comparison between the predicted concentration profiles and experimental concentration profiles for a fixed flow rate are provided. The experimental and predicted values show a satisfactory agreement.

At step 312 of the present disclosure, the one or more hardware are configured to adaptively update, the prediction model when the monitored deviation between the experimental value and the predicted value of the one or more quality attributes exceeds a first predefined threshold. This mean if difference or deviation between the determined value and experimental profile of elution is exceeding the first predefined threshold, then self-learning of the prediction model is performed. The first threshold value is obtained from the knowledge database and threshold deviation is expressed in percentage, like 5%. For monitoring and control, accurate models are required. These models require tuning whenever the accuracy is compromised due to change in operating conditions or aging of the equipment resulting in self-learning of the prediction model. The parameters obtained from the one or more soft sensors are used to convert UV measurements to concentration needs calibration whenever there is a change in feed material and size ranges. Similarly, the parameters associated with the physics-based or data based models are used to predict elution profiles also need tuning when there is a change in feed material or CEX column design. design of experiments (DoE) is performed and experiments are conducted to collect the data for new process conditions and the parameters associated with the physics-based models are tuned with these experimental observations. In case of data-based models, the validity of the models is limited by various elements like input conditions (such as feed material and size ranges), regime (from which the data is collected). Whenever there is change in input conditions or regime of CEX operations, the real-time data from new operating conditions is stored in the system database 114 and is later extracted for training these data-based models. The self-learning step of the prediction model involves training existing physics-based models to new operating conditions with the collected experimental data. Operator further performs offline simulations using the user defined simulation module with the help of tuned physics-based models to generate synthetic data. The generated synthetic data is used to create or tune empirical or data-based models for further use.

In an embodiment, the apparatus 100 is further configured by the one or more hardware processors 112 to optimize, a set of manipulated variables from a set of optimization input data in accordance with a targeted specification of the plurality of charge variants of the plurality of components using a control and optimization model. The set of optimization input data comprises (i) the predicted value of the one or more quality attributes, and (ii) the plurality of preprocessed data. The optimized set of manipulated variables is recommended to the continuous chromatography system to optimize the chromatography process for achieving the targeted specification of the plurality of charge variants of the plurality of components. In an embodiment, the optimized set of manipulated variables are obtained by performing at least one of (i) a static optimization and (ii) a dynamic optimization.

The step of optimizing the set of manipulated variables is performed with the help of the control and optimization model and further better understood by way of following exemplary explanation.

The control and optimization model is used to predict the pool start time, end time and velocity of mobile phase according to targeted specification (i.e., yield and purity) of charge variants composition in the CEX pool. Using the prediction model, elution profiles are obtained for each variant. In CEX operations, for given operating conditions, the yield and the purity of the product depends on pool start and end times and hence they depend on the time at which valve is switched from product to waste. Therefore, this type of problem is formulated as an optimization problem and the control and optimization model is solved using the control and optimization module to obtain the pool start and end time that helps in obtaining the targeted yield and purity. Therefore, pool start and end times are considered as manipulated variables that are recommended by the control and optimization module. Charge variant composition in protein load is considered as disturbance variables as the CEX operations do not have control over the feed from the upstream. The yield and purity are considered as process variables that are monitored and maintained at their target values using the control and optimization module. The control and optimization module uses at least one of (i) the static optimization and (ii) the dynamic optimization to optimize the yield and purity. Optimization aims at improving the purity and yield by suggesting corresponding optimal trajectories of pool start time and end time such that by optimizing/controlling the pool start time and end time, the elution profile determined by the prediction model can be improved further. An optimization problem is created dynamically as a function of the pool start time and end time measured from the continuous chromatography system. Subsequently, at least one of (i) the static optimization, and (ii) the dynamic optimization is determined using an optimization technique. In case of dynamic optimization, a trajectory of optimal set-points of pool start time and end time is obtained dynamically when the chromatography process is running/operating, and the pool start time and end time may be controlled/adjusted during the working. However, in case of static optimization, the set-point of the manipulated variables (i.e., the pool start time and end time) are determined for a run, till next implementation is obtained.

The control and optimization model is further dynamically modified when a deviation between an estimated trajectory of the set of manipulated variables and a reference trajectory exceeds a second predefined threshold. The second predefined threshold is selected from the knowledge database based on the chromatography process. Impurities in the medium depends on type of cell line, buffer, surfactants, antifoam, or protease inhibitor used in the chromatography process. Based on the type of aforesaid components used in the chromatography process, appropriate value of the second predefined threshold is chosen. In an embodiment, the trajectory of the set of manipulated variables is estimated for a time period of a control and prediction horizon. The control and optimization model is dynamically modified by performing at least one of (i) modifying an objective function, (ii) changing values of one or more constraints, (iii) re-estimating one or more tolerances, convergence criteria and one or more relevant parameters of optimization algorithm, and (iv) choosing a different optimization algorithm. In other words, optimum set points of the pool start time and end time, as determined by the control and optimization model may not match values in corresponding reference profiles. Here, the reference profiles may be predefined and configured with the system, preferably based on historical performance data of the chromatography operation. If the difference between the determined optimum set points of the pool start time and/or the pool end time and the corresponding reference profile is exceeding the second predefined threshold, then the system may trigger a self-pupation of the control and optimization model. The system 100 may perform one or more of a) modifying an objective function, b) changing values of the constraints, c) re-estimating tolerances, convergence criteria and other relevant parameters of optimization algorithm, and d) choosing a different optimization algorithm, as part of the self-updating. The dynamic optimization first identifies a plurality of constraints affecting the optimization from the generated optimization problem. The plurality of constraints may be defined by an authorized user, based on requirements. Some of the examples of constraints are, limiting the maximum allowed throughput which in turn is limited by the efficiency of the adsorbent or the pressure drop, capacity limit, limiting cost of operation and/or the like. Further, a control horizon and prediction horizon are identified for the optimization problem, using the plurality of constraints. In case of dynamic optimization, the control and prediction horizon values are obtained from the knowledge database. The prediction horizon is the duration for which the control and optimization model predicts future values of manipulated variables and control horizon is the duration for which the set of optimized manipulated variables is implemented for control. Furthermore, a trajectory of optimal set points of the pool start time and end time is obtained based on the identified control horizon and prediction horizon. Based on the obtained trajectory of optimal set points, recommendations are generated to improve the determined elution profile.

Mathematical formulation of two optimization uses cases for maintaining yield and purity at their target values are as mentioned below:

Case 1: In this case, values of pool start and end times are optimized in their practical limits such that targeted yield is achieved in accordance with equation (3) provided below:

$$\underset{(pool\ start\ time,\ pool\ end\ time)}{Minimize}\ J \qquad (3)$$

Here, $J = (Yield - Yield_{target})^2$

Case 2: In this case, the values of pool start and end times are optimized in their practical limits such that targeted purity is achieved in accordance with equation (4) provided below:

$$\underset{(pool\ start\ time,\ pool\ end\ time)}{Minimize}\ J \qquad (4)$$

Here, $J = (Purity - Purity_{target})^2$

Case 3: In this case, the values of pool start and end times are optimized in their practical limits such that targeted capacity utilization is achieved in accordance with equation (5) provided below:

$$Minimize_{(pool\ start\ time,\ pool\ end\ time)} \quad J \qquad (5)$$

Here, $J = (Capacity\ Utilization - Capacity\ utilization_{target})^2$

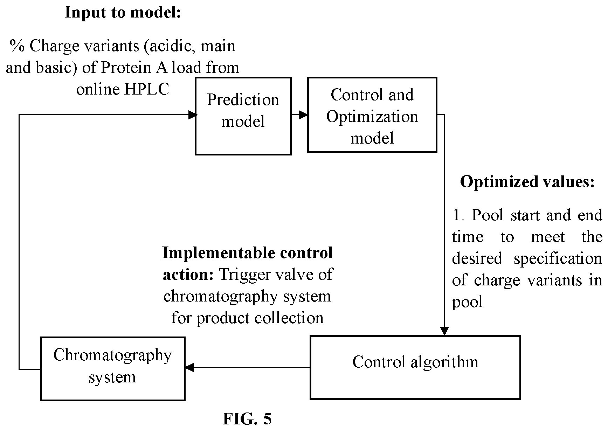

For solving these optimization problems, various existing optimization algorithms are utilized. These optimization algorithms may include but not limited to genetic algorithm, particle swarm optimization algorithm, sequential quadratic optimization, and/or the like. FIG. 5 depicts illustrates an exemplary block diagram showing inputs and outputs of prediction model and control and optimization model respectively in accordance with some embodiments of the present disclosure.

In an embodiment, the plurality of simulated data is obtained using the user defined simulation module. This module is configured to perform simulation tasks on the CEX process that are, in general, not required or not possible in real-time owing to the complexity of the system but are useful to be performed at regular intervals. The user defined simulation module (Also referred as offline simulation module) helps gain knowledge about the chromatography process using the available one or more soft-sensors or models. Operator performing an CEX operation can study effect of various input conditions alongside real-time operations without actually changing real-time operations. It helps in performing a what-if analysis in which effect of change in input parameters such as elute composition, pool start time, and end times and mobile phase velocity on yield and purity of product is determined. For example, operator can vary the load composition to CEX and understand its effect on yield. He then further changes the parameters related to the pool start and end time and perform the same exercise again. He can now understand the change in yield with change in these parameters. The user defined simulation module also helps in performing Design of Experiments (DoE). During a change in operating conditions such as feed material or CEX column design, it helps the operator in deciding the number of experiments to perform a design space study. By performing these experiments, operator can generate data that is be stored in the system database 114.

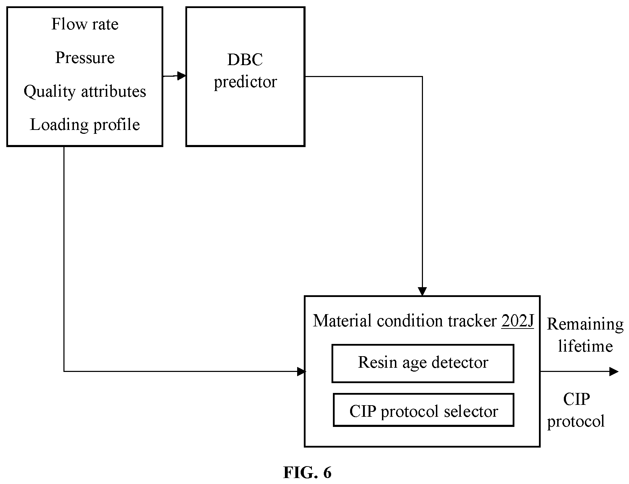

In an embodiment, the apparatus 100 is further configured by the one or more hardware processors 112 to monitor one or more properties of the capture chromatography column and polishing chromatography column using a material condition tracker 202J and determine a remaining lifetime of one or more materials in the capture chromatography column and polishing chromatography column. The one or more properties may include but not limited to a health status of the one or more materials in the chromatography column, a performance related factor such as performance decay, an/or the like. The one or more materials in the chromatography column may include but not limited to a resin. Due to persistent exposure to bioprocess conditions, there could be a degradation of resin which leads to reduction of resin lifetime. Further, aging of the resin leads to reduction in yield and low lifetime of the resin increases cost of the chromatography process. The reduction in efficiency and poor performance of the chromatography process further increases load in a process downstream and fails to meet regulatory norms. Thus, the health and aging of the resin is monitored by the material condition tracker 202J (interchangeably referred as a resin health and aging monitoring module). FIG. 6 illustrates an exemplary block diagram showing inputs and outputs of the material condition tracker in accordance with some embodiments of the present disclosure.

As shown in FIG. 2, the material condition tracker 202J receives input from the data-processing module and the state estimator. The input data, as shown in FIG. 6, may comprises but not limited to a flowrate, a pressure, a loading profile, the one or more quality attributes, one or more material properties (e.g., resin properties), and/or the like. The one or more material properties may include but not limited to an adsorbent particle diameter, a void fraction of a bed, a molecular diffusion coefficient and the like. For a newly packed bed, the resin health monitor module material condition tracker 202J predicts a dynamic binding capacity (DBC) and estimates the remaining lifetime (i.e., remaining purification cycles) of the resin for a given flowrate. The material condition tracker 202J fetches an appropriate model from the chromatography model repository to predict the DBC. The model used for prediction may include but not limited to one or more machine learning models such as support vector machines, random forest, neural networks, and/or the like.

Further, based on the monitored one or more properties, one or more corrective actions are recommended to the continuous chromatography system 102. The knowledge database comprises information regarding the one or quality attributes that are expected and pressure drop using a particular resin and bed height for a given operating condition. For every purification cycle, based on the operating condition, the material condition tracker 202J compares the predicted value of the one or more quality attributes and the pressure drop with a reference data available in the chromatography knowledge database. If the difference between the predicted values of the one or more quality attributes and pressure drop and the reference values exceeds a pre-defined threshold, then the material condition tracker 202J raises an alarm indicating fouling. The pre-defined threshold can be provided as a user or operator input. The material condition tracker 202J constantly monitors the pressure drop in each purification cycle and look for any patterns in the pressure drop in successive cycles. The patterns are detected using neural network algorithms. If an increase in the pressure drop is identified over successive cycles, a new cleaning-in-place (CIP) protocol is suggested. The material condition tracker 202J fetches an appropriate model from the chromatography model repository and further predicts a decay in DBC with respect to variations observed in the pressure drop. The chromatography model repository comprises a machine learning model which can predict the decay in DBC with respect to variation in pressure drop. The machine learning model uses a predicted DBC of a newly packed bed as a base line and predicts an expected decay from it based on pressure drop variation.

The written description describes the subject matter herein to enable any person skilled in the art to make and use the embodiments.

The embodiments of present disclosure provide control and optimization of continuous chromatography process by allowing integration of control strategies with advanced monitoring sensors via PYTHON middleware and PLC that requires an in-depth process understanding. The present disclosure utilizes in-line concentration values obtained from HPLC data using one or more soft-sensors to control the valve switch time obtained via optimization. In the present disclosure, mechanistic model/data-based models are to obtain the elution profiles for a concentration of charge variants and perform monitoring, controlling and dynamic optimization of the chromatography process in real time. In the present disclosure a multicolumn chromatography continuous train is operating with multiple automated pumps, valves and monitored surge tanks to determine an overall scheduling and control of chromatography unit switching time to achieve targeted charge variant composition in the CEX elute for entire duration of continuous chromatography campaign.

It is to be understood that the scope of the protection is extended to such a program and in addition to a computer-readable means having a message therein, as long as they fall within the scope of the invention as defined by the appended claims, such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A method for control and optimization of a continuous chromatography process, comprising:

   receiving (302), via one or more hardware processors, a plurality of data pertaining to a chromatography process at a pre-determined frequency from one or more sub-systems and a plurality of data sources as input, wherein the plurality of data comprises a plurality of real time data and a plurality of non-real time data;
   preprocessing (304), via the one or more hardware processors, the received plurality of data using one or more pre-processing techniques in real time, wherein the one or more preprocessing techniques perform at least one of (i) identification and removal of outliers, (ii) imputation of missing data, and (iii) synchronization and integration of a subset of the plurality of data obtained from one or more physical sensors using their frequency, wherein the step of preprocessing identifies a variation in incoming data by comparing it with reference data available in a plurality of sub-databases;

obtaining (306), via one or more models executed by the one or more hardware processors, a set of data associated with one or more variables of a plurality of charge variants of a plurality of components from the plurality of preprocessed data using one or more soft sensors;

predicting (308), via a prediction model executed by the one or more hardware processors, value of one or more quality attributes from the set of data associated with the one or more variables of the plurality of charge variants of the plurality of components;

monitoring (310), via the one or more hardware processors, a deviation between an experimental value and predicted value of the one or more quality attributes, wherein the monitoring is performed based on comparison of the predicted value of the one or more quality attributes and the experimental values of the one or more quality attributes;

adaptively updating (312), via the one or more hardware processors, the prediction model when the monitored deviation between the experimental value and the predicted value of the one or more quality attributes exceeds a first predefined threshold, wherein the first threshold value is obtained from a knowledge base, wherein self-learning of the prediction model is performed, via the one or more hardware processors, if the deviation between the predicted value and the experimental value is exceeding the first predefined threshold, wherein the self-learning of the prediction model is based on training existing physics-based models to new operating conditions with the collected experimental data;

optimizing, a set of manipulated variables from a set of optimization input data in accordance with a targeted specification of the plurality of charge variants of the plurality of components using a control and optimization model, wherein the set of optimization input data comprises (i) the predicted value of the one or more quality attributes, and (ii) the plurality of preprocessed data;

dynamically modifying the control and optimization model when a deviation between an estimated trajectory of the set of manipulated variables and a reference trajectory exceeds a second predefined threshold; and

recommending optimized set of manipulated variables to the continuous chromatography system to optimize the chromatography process for achieving the targeted specification of the plurality of charge variants of the plurality of components, and wherein the optimized set of manipulated variables are obtained by performing at least one of (i) a static optimization and (ii) a dynamic optimization.

2. The method as claimed in claim 1, wherein the plurality of real time data is obtained from one or more online analytical instruments.

3. The method as claimed in claim 1, wherein the trajectory of the set of manipulated variables is estimated for a time period of a control and prediction horizon.

4. The method as claimed in claim 1, wherein the control and optimization model is dynamically modified by performing at least one of (i) modifying an objective function, (ii) changing values of one or more constraints, (iii) re-estimating one or more tolerances, convergence criteria and one or more relevant parameters of optimization algorithm, and (iv) choosing a different optimization algorithm.

5. The method as claimed in claim 1, comprising:

monitoring one or more properties of a chromatography column using a material condition tracker; and determining a remaining lifetime of one or more materials in the chromatography column and recommending one or more corrective actions to the continuous chromatography system based on the monitored one or more properties.

6. An apparatus (100) for control and optimization of a continuous chromatography process, comprising

a memory (106) storing instructions;
one or more Input/Output (I/O) interfaces (108);
one more sub-systems (110); and
one or more hardware processors (112) coupled to the memory (106) via the one or more I/O interfaces (108), wherein the one or more hardware processors (112) are configured by the instructions to:

receive, a plurality of data pertaining to a chromatography process at a pre-determined frequency from the one or more sub-systems and a plurality of data sources as input, wherein the plurality of data comprises a plurality of real time data and a plurality of non-real time data;

preprocess, the received plurality of data using one or more preprocessing techniques in real time, wherein the one or more preprocessing techniques perform at least one of (i) identification and removal of outliers, (ii) imputation of missing data, and (iii) synchronization and integration of a subset of the plurality of data obtained from one or more physical sensors using their frequency, wherein the step of preprocessing identifies a variation in incoming data by comparing it with reference data available in a plurality of sub-databases;

obtain, one or more parameters of a plurality of charge variants of a plurality of components from a plurality of simulated data and the plurality of preprocessed data using one or more soft sensors;

predict, a value of one or more quality attributes from the one or more parameters of the plurality of charge variants of the plurality of components using a prediction model;

monitoring, a deviation between a simulated value and predicted value of the one or more quality attributes, wherein the monitoring is performed based on comparison of the predicted value of the one or more quality attributes and the experimental values of the one or more quality attributes;

adaptively update, the prediction model when the monitored deviation between the simulated value and the predicted value of the one or more quality attributes exceeds a first predefined threshold, wherein the first threshold value is obtained from a knowledge base, wherein self-learning of the prediction model is performed, if the deviation between the predicted value and the experimental value is exceeding the first predefined threshold, wherein the self-learning of the prediction model is based on training existing physics-based models to new operating conditions with the collected experimental data;

optimize a set of manipulated variables from a set of optimization input data in accordance with a targeted specification of the plurality of charge variants of the plurality of components using a control and optimization model, wherein the set of optimization input data comprises (i) the predicted value of the one or more quality attributes, and (ii) the plurality of preprocessed data;

dynamically modify the control and optimization model when a deviation between an estimated trajectory of the set of manipulated variables and a reference trajectory exceeds a second predefined threshold; and

recommend, optimized set of manipulated variables to the continuous chromatography system to optimize the chromatography process for achieving the targeted specification of the plurality of charge variants of the plurality of components, and wherein the optimized set of manipulated variables are obtained by performing at least one of (i) a static optimization and (ii) a dynamic optimization.

7. The apparatus as claimed in claim 6, wherein the plurality of real time data is obtained from one or more online analytical instruments.

8. The apparatus as claimed in claim 6, wherein the trajectory of the set of manipulated variables is estimated for a time period of a control and prediction horizon.

9. The apparatus as claimed in claim 6, wherein the control and optimization model is dynamically modified by performing at least one of (i) modifying an objective function, (ii) changing values of one or more constraints, (iii) re-estimating one or more tolerances, convergence criteria and one or more relevant parameters of optimization algorithm, and (iv) choosing a different optimization algorithm.

10. The apparatus as claimed in claim 6, configured by the one or more hardware processors to:

monitor one or more properties of a chromatography column using a material condition tracking module; and determine a remaining lifetime of one or more materials in the chromatography column and recommending one or more corrective actions to the continuous chromatography system based on the monitored one or more properties.

11. One or more non-transitory computer readable mediums comprising one or more instructions which when executed by one or more hardware processors cause:

receiving a plurality of data pertaining to a chromatography process at a pre-determined frequency from one or more sub-systems and a plurality of data sources as input, wherein the plurality of data comprises a plurality of real time data and a plurality of non-real time data;
preprocessing the received plurality of data using one or more preprocessing techniques in real time, wherein the one or more preprocessing techniques perform at least one of (i) identification and removal of outliers, (ii) imputation of missing data, and (iii) synchronization and integration of a subset of the plurality of data obtained from one or more physical sensors using their frequency, wherein the step of preprocessing identifies a variation in incoming data by comparing it with reference data available in a plurality of sub-databases;

obtaining a set of data associated with one or more variables of a plurality of charge variants of a plurality of components from the plurality of preprocessed data using one or more soft sensors;

predicting value of one or more quality attributes from the set of data associated with the one or more variables of the plurality of charge variants of the plurality of components;

monitoring a deviation between an experimental value and predicted value of the one or more quality attributes, wherein the monitoring is performed based on comparison of the predicted value of the one or more quality attributes and the experimental values of the one or more quality attributes;

adaptively updating the prediction model when the monitored deviation between the experimental value and the predicted value of the one or more quality attributes exceeds a first predefined threshold, wherein the first threshold value is obtained from a knowledge base, wherein self-learning of the prediction model is performed, if the deviation between the predicted value and the experimental value is exceeding the first predefined threshold, wherein the self-learning of the prediction model is based on training existing physics-based models to new operating conditions with the collected experimental data;

optimizing, a set of manipulated variables from a set of optimization input data in accordance with a targeted specification of the plurality of charge variants of the plurality of components using a control and optimization model, wherein the set of optimization input data comprises (i) the predicted value of the one or more quality attributes, and (ii) the plurality of preprocessed data;

dynamically modifying the control and optimization model when a deviation between an estimated trajectory of the set of manipulated variables and a reference trajectory exceeds a second predefined threshold; and

recommending optimized set of manipulated variables to the continuous chromatography system to optimize the chromatography process for achieving the targeted specification of the plurality of charge variants of the plurality of components, and wherein the optimized set of manipulated variables are obtained by performing at least one of (i) a static optimization and (ii) a dynamic optimization.

12. The method as claimed in claim 1, wherein the plurality of components include biotherapeutic products such as monoclonal antibodies and their byproducts obtained after Cation Exchange chromatography, CEX, wherein the set of data associated with the one or more variables of the plurality of change variants of the plurality of components include a breakthrough curve of capture chromatography and concentration of components, wherein the one or more soft sensors obtains simulated data not generated by the one or more physical sensors, wherein the simulated data obtained by the one or more soft sensors is used along with the plurality of preprocessed data for control and monitoring.

13. The method as claimed in claim 1, wherein the one or more quality attributes include column efficiency, peak asymmetry, resolution and tailing factor of an elution profile of each charge variant from the plurality of charge variants of the plurality of components, wherein from the breakthrough curve of the capture chromatography, composition of different charge components at capture chromatography elute is determined, wherein concentration data of components in a Cation Exchange Chromatography, CEX, load is used as input to the prediction model, wherein the input data received by the prediction model include the concentration data of CEX load from the one or more soft-sensors, chromatography column dimensions, resin properties, superficial velocity.

14. The method as claimed in claim 1, wherein the control and optimization model is used to predict pool start time, end time, velocity of mobile phase according to targeted specification of change variants composition in a Cation Exchange Chromatography, CEX, pool and
elution profiles obtained for each variant by the prediction model.

**Patentansprüche**

1. Verfahren zur Steuerung und Optimierung eines kontinuierlichen Chromatographieprozesses, umfassend:

Empfangen (302), über einen oder mehrere Hardwareprozessoren, einer Mehrzahl von Daten, die sich auf einen Chromatographieprozess mit einer vorbestimmten Frequenz beziehen, von einem oder mehreren Teilsystemen und einer Mehrzahl von Datenquellen als Eingabe, wobei die Mehrzahl von Daten eine Mehrzahl von Echtzeitdaten und eine Mehrzahl von Nicht-Echtzeitdaten umfasst;

Vorverarbeiten (304), über den einen oder die mehreren Hardwareprozessoren, der empfangenen Mehrzahl von Daten unter Verwendung einer oder mehrerer Vorverarbeitungstechniken in Echtzeit, wobei die eine oder die mehreren Vorverarbeitungstechniken mindestens eines von (i) Identifizierung und Entfernung von Ausreißern, (ii) Zuordnung von fehlenden Daten und (iii) Synchronisation und Integration einer Teilmenge der Mehrzahl von Daten, die von einem oder mehreren physikalischen Sensoren erhalten werden, unter Verwendung ihrer Frequenz durchführen, wobei der Schritt der Vorverarbeitung eine Variation von eingehenden Daten identifiziert, indem er sie mit Referenzdaten vergleicht, die in einer Mehrzahl von Teildatenbanken verfügbar sind;

Erhalten (306), über ein oder mehrere Modelle, die von dem einen oder den mehreren Hardwareprozessoren ausgeführt werden, eines Satzes von Daten, die einer oder mehreren Variablen einer Mehrzahl von Ladungsvarianten einer Mehrzahl von Komponenten zugeordnet sind, aus der Mehrzahl von vorverarbeiteten Daten unter Verwendung eines oder mehrerer weicher Sensoren;

Vorhersagen (308), über ein Vorhersagemodell, das von dem einen oder den mehreren Hardwareprozessoren ausgeführt wird, eines Werts eines oder mehrerer Qualitätsattribute aus dem Satz von Daten, die der einen oder den mehreren Variablen der Mehrzahl von Ladungsvarianten der Mehrzahl von Komponenten zugeordnet sind;

Überwachen (310), über den einen oder die mehreren Hardwareprozessoren, einer Abweichung zwischen einem experimentellen Wert und einem vorhergesagten Wert des einen oder der mehreren Qualitätsattribute, wobei das Überwachen basierend auf einem Vergleich des vorhergesagten Werts des einen oder der mehreren Qualitätsattribute und der experimentellen Werte des einen oder der mehreren Qualitätsattribute durchgeführt wird;

adaptives Aktualisieren (312), über den einen oder die mehreren Hardwareprozessoren, des Vorhersagemodells, wenn die überwachte Abweichung zwischen dem experimentellen Wert und dem vorhergesagten Wert des einen oder der mehreren Qualitätsattribute einen ersten vordefinierten Schwellenwert überschreitet, wobei der erste Schwellenwert von einer Wissensbasis erhalten wird, wobei Selbstlernen des Vorhersagemodells über den einen oder die mehreren Hardwareprozessoren durchgeführt wird, wenn die Abweichung zwischen dem vorhergesagten Wert und dem experimentellen Wert den ersten vordefinierten Schwellenwert überschreitet, wobei das Selbstlernen des Vorhersagemodells auf dem Trainieren existierender physikbasierter Modelle auf neue Betriebsbedingungen mit den gesammelten experimentellen Daten basiert;

Optimieren eines Satzes von manipulierten Variablen aus einem Satz von Optimierungs-Eingabedaten gemäß einer angestrebten Spezifikation der Mehrzahl von Ladungsvarianten der Mehrzahl von Komponenten unter Verwendung eines Steuerungs- und Optimierungsmodells, wobei der Satz von Optimierungs-Eingabedaten (i) den vorhergesagten Wert des einen oder der mehreren Qualitätsattribute und (ii) die Mehrzahl von vorverarbeiteten Daten umfasst;

dynamisches Modifizieren des Steuerungs- und Optimierungsmodells, wenn eine Abweichung zwischen einer geschätzten Trajektorie des Satzes von manipulierten Variablen und einer Referenztrajektorie einen zweiten vordefinierten Schwellenwert überschreitet; und

Empfehlen eines optimierten Satzes von manipulierten Variablen an das kontinuierliche Chromatographiesystem, um den Chromatographieprozess zum Erreichen der angestrebten Spezifikation der Mehrzahl von Ladungsvarianten der Mehrzahl von Komponenten zu optimieren, und wobei der optimierte Satz von manipulierten Variablen durch Durchführen von mindestens einem von (i) einer statischen Optimierung und (ii) einer dynamischen Optimierung erhalten wird.

2. Verfahren nach Anspruch 1, wobei die Mehrzahl von Echtzeitdaten von einem oder mehreren Online-Analyseinstrumenten erhalten wird.

3. Verfahren nach Anspruch 1, wobei die Trajektorie des Satzes von manipulierten Variablen für einen Zeitraum eines Steuerungs- und Vorhersagehorizonts geschätzt wird.

4. Verfahren nach Anspruch 1, wobei das Steuerungs- und Optimierungsmodell durch Durchführen von mindestens einem von (i) Modifizieren einer Zielfunktion, (ii) Ändern von Werten von einer oder mehreren Randbedingungen, (iii) Neuschätzen von einer oder mehreren Toleranzen, Konvergenzkriterien und einem oder mehreren relevanten Parametern des Optimierungsalgorithmus und (iv) Auswählen eines anderen Optimierungsalgorithmus dynamisch modifiziert wird.

5. Verfahren nach Anspruch 1, umfassend:

Überwachen von einer oder mehreren Eigenschaften einer Chromatographiesäule unter Verwendung eines Materialzustandstrackers; und
Bestimmen einer verbleibenden Lebensdauer von einem oder mehreren Materialien in der Chromatographiesäule und Empfehlen von einer oder mehreren Korrekturmaßnahmen an das kontinuierliche Chromatographiesystem basierend auf der überwachten einen oder den überwachten mehreren Eigenschaften.

6. Vorrichtung (100) zur Steuerung und Optimierung eines kontinuierlichen Chromatographieprozesses, umfassend:

einen Speicher (106), der Anweisungen speichert;
eine oder mehrere Eingabe/Ausgabe(E/A)-Schnittstellen (108);
ein oder mehrere Teilsysteme (110); und
einen oder mehrere Hardwareprozessoren (112), die mit dem Speicher (106) über die eine oder die mehreren E/A-Schnittstellen (108) gekoppelt sind, wobei der eine oder die mehreren Hardwareprozessoren (112) durch die Anweisungen konfiguriert sind zum:

Empfangen einer Mehrzahl von Daten, die sich auf einen Chromatographieprozess mit einer vorbestimmten Frequenz beziehen, von dem einen oder den mehreren Teilsystemen und einer Mehrzahl von Datenquellen als Eingabe, wobei die Mehrzahl von Daten eine Mehrzahl von Echtzeitdaten und eine Mehrzahl von Nicht-Echtzeitdaten umfasst;
Vorverarbeiten der empfangenen Mehrzahl von Daten unter Verwendung einer oder mehrerer Vorverarbeitungstechniken in Echtzeit, wobei die eine oder die mehreren Vorverarbeitungstechniken mindestens eines von (i) Identifizierung und Entfernung von Ausreißern, (ii) Zuordnung von fehlenden Daten und (iii) Synchronisation und Integration einer Teilmenge der Mehrzahl von Daten, die von einem oder mehreren physikalischen Sensoren erhalten werden, unter Verwendung ihrer Frequenz durchführen, wobei der Schritt der Vorverarbeitung eine Variation von eingehenden Daten identifiziert, indem er sie mit Referenzdaten vergleicht, die in einer Mehrzahl von Teildatenbanken verfügbar sind;
Erhalten eines oder mehrerer Parameter einer Mehrzahl von Ladungsvarianten einer Mehrzahl von Komponenten aus einer Mehrzahl von simulierten Daten und der Mehrzahl von vorverarbeiteten Daten unter Verwendung eines oder mehrerer weicher Sensoren;
Vorhersagen eines Werts eines oder mehrerer Qualitätsattribute aus dem einen oder den mehreren Parametern der Mehrzahl von Ladungsvarianten der Mehrzahl von Komponenten unter Verwendung eines Vorhersagemodells;
Überwachen einer Abweichung zwischen einem simulierten Wert und einem vorhergesagten Wert des einen oder der mehreren Qualitätsattribute, wobei das Überwachen basierend auf einem Vergleich des vorhergesagten Werts des einen oder der mehreren Qualitätsattribute und der experimentellen Werte des einen oder der mehreren Qualitätsattribute durchgeführt wird;
adaptives Aktualisieren des Vorhersagemodells, wenn die überwachte Abweichung zwischen dem simulierten Wert und dem vorhergesagten Wert des einen oder der mehreren Qualitätsattribute einen ersten vordefinierten Schwellenwert überschreitet, wobei der erste Schwellenwert von einer Wissensbasis erhalten wird, wobei Selbstlernen des Vorhersagemodells durchgeführt wird, wenn die Abweichung zwischen dem vorhergesagten Wert und dem experimentellen Wert den ersten vordefinierten Schwellenwert überschreitet, wobei das Selbstlernen des Vorhersagemodells auf dem Trainieren existierender physikbasierter Modelle auf neue Betriebsbedingungen mit den gesammelten experimentellen Daten basiert;
Optimieren eines Satzes von manipulierten Variablen aus einem Satz von Optimierungs-Eingabedaten gemäß einer angestrebten Spezifikation der Mehrzahl von Ladungsvarianten der Mehrzahl von Komponenten unter Verwendung eines Steuerungs- und Optimierungsmodells, wobei der Satz von Optimierungs-Eingabedaten (i) den vorhergesagten Wert des einen oder der mehreren Qualitätsattribute und (ii) die Mehrzahl von vorverarbeiteten Daten umfasst;
dynamisches Modifizieren des Steuerungs- und Optimierungsmodells, wenn eine Abweichung zwischen einer geschätzten Trajektorie des Satzes von manipulierten Variablen und einer Referenztrajektorie einen zweiten vordefinierten Schwellenwert überschreitet; und
Empfehlen eines optimierten Satzes von manipulierten Variablen an das kontinuierliche Chromatographiesystem, um den Chromatographieprozess zum Erreichen der angestrebten Spezifikation der Mehrzahl von Ladungsvarianten der Mehrzahl von Komponenten zu optimieren, und wobei der optimierte Satz von manipulierten Variablen durch Durchführen von mindestens einem von (i) einer statischen Optimierung und (ii) einer dynamischen Optimierung erhalten wird.

7. Vorrichtung nach Anspruch 6, wobei die Mehrzahl von Echtzeitdaten von einem oder mehreren Online-Analyseinstrumenten erhalten wird.

8. Vorrichtung nach Anspruch 6, wobei die Trajektorie des Satzes von manipulierten Variablen für einen Zeitraum eines Steuerungs- und Vorhersagehorizonts geschätzt wird.

9. Vorrichtung nach Anspruch 6, wobei das Steuerungs- und Optimierungsmodell durch Durchführen von mindestens einem von (i) Modifizieren einer Zielfunktion, (ii) Ändern von Werten von einer oder mehreren Randbedingungen, (iii) Neuschätzen von einer oder mehreren Toleranzen, Konvergenzkriterien und einem oder mehreren relevanten Parametern des Optimierungsalgorithmus und (iv) Auswählen eines anderen Optimierungsalgorithmus dynamisch modifiziert wird.

10. Vorrichtung nach Anspruch 6, die durch den einen oder die mehreren Hardwareprozessoren konfiguriert ist zum:

Überwachen von einer oder mehreren Eigenschaften einer Chromatographiesäule unter Verwendung eines Materialzustandstrackermoduls; und
Bestimmen einer verbleibenden Lebensdauer von einem oder mehreren Materialien in der Chromatographiesäule und Empfehlen von einer oder mehreren Korrekturmaßnahmen an das kontinuierliche Chromatographiesystem basierend auf der überwachten einen oder den überwachten mehreren Eigenschaften.

11. Ein oder mehrere nichtflüchtige computerlesbare Medien, die eine oder mehrere Anweisungen umfassen, die, wenn sie durch einen oder mehrere Hardwareprozessoren ausgeführt werden, Folgendes bewirken:

Empfangen einer Mehrzahl von Daten, die sich auf einen Chromatographieprozess mit einer vorbestimmten Frequenz beziehen, von einem oder mehreren Teilsystemen und einer Mehrzahl von Datenquellen als Eingabe, wobei die Mehrzahl von Daten eine Mehrzahl von Echtzeitdaten und eine Mehrzahl von Nicht-Echtzeitdaten umfasst;
Vorverarbeiten der empfangenen Mehrzahl von Daten unter Verwendung einer oder mehrerer Vorverarbeitungstechniken in Echtzeit, wobei die eine oder die mehreren Vorverarbeitungstechniken mindestens eines von (i) Identifizierung und Entfernung von Ausreißern, (ii) Zuordnung von fehlenden Daten und (iii) Synchronisation und Integration einer Teilmenge der Mehrzahl von Daten, die von einem oder mehreren physikalischen Sensoren erhalten werden, unter Verwendung ihrer Frequenz durchführen, wobei der Schritt der Vorverarbeitung eine Variation von eingehenden Daten identifiziert, indem er sie mit Referenzdaten vergleicht, die in einer Mehrzahl von Teildatenbanken verfügbar sind;
Erhalten eines Satzes von Daten, die einer oder mehreren Variablen einer Mehrzahl von Ladungsvarianten einer Mehrzahl von Komponenten zugeordnet sind, aus der Mehrzahl von vorverarbeiteten Daten unter Verwendung eines oder mehrerer weicher Sensoren;
Vorhersagen eines Werts eines oder mehrerer Qualitätsattribute aus dem Satz von Daten, die der einen oder den mehreren Variablen der Mehrzahl von Ladungsvarianten der Mehrzahl von Komponenten zugeordnet sind;
Überwachen einer Abweichung zwischen einem experimentellen Wert und einem vorhergesagten Wert des einen oder der mehreren Qualitätsattribute, wobei das Überwachen basierend auf einem Vergleich des vorhergesagten Werts des einen oder der mehreren Qualitätsattribute und der experimentellen Werte des einen oder der mehreren Qualitätsattribute durchgeführt wird;
adaptives Aktualisieren des Vorhersagemodells, wenn die überwachte Abweichung zwischen dem experimentellen Wert und dem vorhergesagten Wert des einen oder der mehreren Qualitätsattribute einen ersten vordefinierten Schwellenwert überschreitet, wobei der erste Schwellenwert von einer Wissensbasis erhalten wird, wobei Selbstlernen des Vorhersagemodells durchgeführt wird, wenn die Abweichung zwischen dem vorhergesagten Wert und dem experimentellen Wert den ersten vordefinierten Schwellenwert überschreitet, wobei das Selbstlernen des Vorhersagemodells auf dem Trainieren existierender physikbasierter Modelle auf neue Betriebsbedingungen mit den gesammelten experimentellen Daten basiert;
Optimieren eines Satzes von manipulierten Variablen aus einem Satz von Optimierungs-Eingabedaten gemäß einer angestrebten Spezifikation der Mehrzahl von Ladungsvarianten der Mehrzahl von Komponenten unter Verwendung eines Steuerungs- und Optimierungsmodells, wobei der Satz von Optimierungs-Eingabedaten (i) den vorhergesagten Wert des einen oder der mehreren Qualitätsattribute und (ii) die Mehrzahl von vorverarbeiteten Daten umfasst;
dynamisches Modifizieren des Steuerungs- und Optimierungsmodells, wenn eine Abweichung zwischen einer geschätzten Trajektorie des Satzes von manipulierten Variablen und einer Referenztrajektorie einen zweiten vordefinierten Schwellenwert überschreitet; und
Empfehlen eines optimierten Satzes von manipulierten Variablen an das kontinuierliche Chromatographiesystem, um den Chromatographieprozess zum Erreichen der angestrebten Spezifikation der Mehrzahl von Ladungsvarianten der Mehrzahl von Komponenten zu optimieren, und wobei der optimierte Satz von manipulierten Variablen durch Durchführen von mindestens einem von (i) einer statischen Optimierung und (ii) einer dynamischen Optimierung erhalten wird.

12. Verfahren nach Anspruch 1, wobei die Mehrzahl von Komponenten biotherapeutische Produkte wie monoklonale Antikörper und ihre Nachprodukte, die nach Kationenaustauschchromatographie, CEX, erhalten werden, beinhaltet, wobei der Satz von Daten, die der einen oder den mehreren Variablen der Mehrzahl von Änderungsvarianten der Mehrzahl von Komponenten zugeordnet sind, eine Durchbruchkurve von Einfangchromatographie und Konzentration von Komponenten beinhaltet, wobei der eine oder die mehreren weichen Sensoren simulierte Daten erhalten, die nicht von dem einen oder den mehreren physischen Sensoren erzeugt werden, wobei die simulierten Daten, die von dem einen oder den mehreren weichen Sensoren erhalten werden, zusammen mit der Mehrzahl von vorverarbeiteten Daten zur Steuerung und Überwachung verwendet werden.

13. Verfahren nach Anspruch 1, wobei das eine oder die mehreren Qualitätsattribute Säuleneffizienz, Peak-Asymmetrie, Auflösung und Tailing-Faktor eines Elutionsprofils jeder Ladungsvariante aus der Mehrzahl von Ladungsvarianten der Mehrzahl von Komponenten beinhalten, wobei aus der Durchbruchkurve der Einfangchromatographie die Zusammensetzung verschiedener Ladungskomponenten bei Einfangchromatographie-Elution bestimmt wird, wobei Konzentrationsdaten von Komponenten in einer Charge von Kationenaustauschchromatographie, CEX, als Eingabe in das Vorhersagemodell verwendet werden, wobei die Eingabedaten, die von dem Vorhersagemodell empfangen werden, die Konzentrationsdaten der CEX-Charge von dem einen oder den mehreren weichen Sensoren, Chromatographiesäulenabmessungen, Harzeigenschaften, Oberflächengeschwindigkeit beinhalten.

14. Verfahren nach Anspruch 1, wobei das Steuerungs- und Optimierungsmodell verwendet wird, um Pool-Startzeit, Endzeit, Geschwindigkeit der mobilen Phase gemäß der angestrebten Spezifikation der Zusammensetzung von Änderungsvarianten in einem Pool von Kationenaustauschchromatographie, CEX, und Elutionsprofilen, die für jede Variante durch das Vorhersagemodell erhalten werden, vorherzusagen.

## Revendications

1. Procédé de commande et d'optimisation d'un processus de chromatographie continue, comprenant :

la réception (302), via un ou plusieurs processeurs matériels, d'une pluralité de données relatives à un processus de chromatographie à une fréquence prédéterminée à partir d'un ou plusieurs sous-systèmes et d'une pluralité de sources de données en tant qu'entrée, dans lequel la pluralité de données comprend une pluralité de données en temps réel et une pluralité de données en temps non réel ;

le prétraitement (304), via les un ou plusieurs processeurs matériels, de la pluralité de données reçues en utilisant une ou plusieurs techniques de prétraitement en temps réel, dans lequel les une ou plusieurs techniques de prétraitement effectuent au moins l'une parmi (i) l'identification et la suppression de valeurs aberrantes, (ii) l'imputation de données manquantes, et (iii) la synchronisation et l'intégration d'un sous-ensemble de la pluralité de données obtenues à partir d'un ou plusieurs capteurs physiques en utilisant leur fréquence, dans lequel l'étape de prétraitement identifie une variation de données entrantes en la comparant à des données de référence disponibles dans une pluralité de sous-bases de données ;

l'obtention (306), via un ou plusieurs modèles exécutés par les un ou plusieurs processeurs matériels, d'un ensemble de données associé à une ou plusieurs variables d'une pluralité de variantes de charge d'une pluralité de composants à partir de la pluralité de données prétraitées en utilisant un ou plusieurs capteurs logiciels ;

la prédiction (308), via un modèle de prédiction exécuté par les un ou plusieurs processeurs matériels, d'une valeur d'un ou plusieurs attributs de qualité à partir de l'ensemble de données associé aux une ou plusieurs variables de la pluralité de variantes de charge de la pluralité de composants ;

la surveillance (310), via les un ou plusieurs processeurs matériels, d'un écart entre une valeur expérimentale et une valeur prédite des un ou plusieurs attributs de qualité, dans lequel la surveillance est effectuée sur la base d'une comparaison de la valeur prédite des un ou plusieurs attributs de qualité et des valeurs expérimentales des un ou plusieurs attributs de qualité ;

la mise à jour adaptative (312), via les un ou plusieurs processeurs matériels, du modèle de prédiction lorsque l'écart surveillé entre la valeur expérimentale et la valeur prédite des un ou plusieurs attributs de qualité dépasse un premier seuil prédéfini, dans lequel la première valeur de seuil est obtenue à partir d'une base de connaissances, dans lequel un auto-apprentissage du modèle de prédiction est effectué, via les un ou plusieurs processeurs matériels, si l'écart entre la valeur prédite et la valeur expérimentale dépasse le premier seuil prédéfini, dans lequel l'auto-apprentissage du modèle de prédiction est basé sur l'entraînement de modèles basés sur la physique existants à de nouvelles conditions de fonctionnement avec les données expérimentales collectées ;

l'optimisation d'un ensemble de variables manipulées à partir d'un ensemble de données d'entrée d'optimisation conformément à une spécification ciblée de la pluralité de variantes de charge de la pluralité de composants en utilisant un modèle de commande et d'optimisation, dans lequel l'ensemble de données d'entrée d'optimisation comprend (i) la valeur prédite des un ou plusieurs attributs de qualité, et (ii) la pluralité de données prétraitées ;

la modification dynamique du modèle de commande et d'optimisation lorsqu'un écart entre une trajectoire estimée de l'ensemble de variables manipulées et une trajectoire de référence dépasse un second seuil prédéfini ; et

la recommandation d'un ensemble optimisé de variables manipulées au système de chromatographie continue pour optimiser le processus de chromatographie pour atteindre la spécification ciblée de la pluralité de variantes de charge de la pluralité de composants, et dans lequel l'ensemble optimisé de variables manipulées est obtenu en effectuant au moins l'une parmi (i) une optimisation statique et (ii) une optimisation dynamique.

2. Procédé selon la revendication 1, dans lequel la pluralité de données en temps réel est obtenue à partir d'un ou plusieurs instruments analytiques en ligne.

3. Procédé selon la revendication 1, dans lequel la trajectoire de l'ensemble de variables manipulées est estimée pour une période de temps d'un horizon de commande et de prédiction.

4. Procédé selon la revendication 1, dans lequel le modèle de commande et d'optimisation est modifié dynamiquement en effectuant au moins l'une parmi (i) la modification d'une fonction objective, (ii) le changement de valeurs d'une ou plusieurs contraintes, (iii) la réestimation d'une ou plusieurs tolérances, de critères de convergence et d'un ou plusieurs paramètres pertinents d'algorithme d'optimisation, et (iv) le choix d'un algorithme d'optimisation différent.

5. Procédé selon la revendication 1, comprenant :

la surveillance d'une ou plusieurs propriétés d'une colonne de chromatographie en utilisant un dispositif de suivi d'état de matériau ; et

la détermination d'une durée de vie restante d'un ou plusieurs matériaux dans la colonne de chromatographie et la recommandation d'une ou plusieurs actions correctives au système de chromatographie continue sur la base des une ou plusieurs propriétés surveillées.

6. Appareil (100) de commande et d'optimisation d'un processus de chromatographie continue, comprenant

une mémoire (106) stockant des instructions ;
une ou plusieurs interfaces d'entrée/sortie (E/S) (108) ;
un ou plusieurs sous-systèmes (110) ; et
un ou plusieurs processeurs matériels (112) couplés à la mémoire (106) via les une ou plusieurs interfaces E/S (108), dans lequel les un ou plusieurs processeurs matériels (112) sont configurés par les instructions pour :

recevoir, une pluralité de données relatives à un processus de chromatographie à une fréquence prédéterminée à partir des un ou plusieurs sous-systèmes et d'une pluralité de sources de données en tant qu'entrée, dans lequel la pluralité de données comprend une pluralité de données en temps réel et une pluralité de données en temps non réel ;

prétraiter, la pluralité de données reçues en utilisant une ou plusieurs techniques de prétraitement en temps réel, dans lequel les une ou plusieurs techniques de prétraitement effectuent au moins l'une parmi (i) l'identification et la suppression de valeurs aberrantes, (ii) l'imputation de données manquantes, et (iii) la synchronisation et l'intégration d'un sous-ensemble de la pluralité de données obtenues à partir d'un ou plusieurs capteurs physiques en utilisant leur fréquence, dans lequel l'étape de prétraitement identifie une variation de données entrantes en la comparant à des données de référence disponibles dans une pluralité de sous-bases de données ;

obtenir, un ou plusieurs paramètres d'une pluralité de variantes de charge d'une pluralité de composants à partir d'une pluralité de données simulées et de la pluralité de données prétraitées en utilisant un ou plusieurs capteurs logiciels ;

prédire, une valeur d'un ou plusieurs attributs de qualité à partir des un ou plusieurs paramètres de la pluralité de variantes de charge de la pluralité de composants en utilisant un modèle de prédiction ;

surveiller, un écart entre une valeur simulée et une valeur prédite des un ou plusieurs attributs de qualité, dans lequel la surveillance est effectuée sur la base d'une comparaison de la valeur prédite des un ou plusieurs attributs de qualité et des valeurs expérimentales des un ou plusieurs attributs de qualité ;

mettre à jour de manière adaptative, le modèle de prédiction lorsque l'écart surveillé entre la valeur simulée et la valeur prédite des un ou plusieurs attributs de qualité dépasse un premier seuil prédéfini, dans lequel la première valeur de seuil est obtenue à partir d'une base de connaissances, dans lequel un auto-apprentissage du modèle de prédiction est effectué, si l'écart entre la valeur prédite et la valeur expérimentale dépasse le premier seuil prédéfini, dans lequel l'auto-apprentissage du modèle de prédiction est basé sur l'entraînement de modèles basés sur la physique existants à de nouvelles conditions de fonctionnement avec les données expérimentales collectées ;

optimiser un ensemble de variables manipulées à partir d'un ensemble de données d'entrée d'optimisation conformément à une spécification ciblée de la pluralité de variantes de charge de la pluralité de composants en utilisant un modèle de commande et d'optimisation, dans lequel l'ensemble de données d'entrée d'optimisation comprend (i) la valeur prédite des un ou plusieurs attributs de qualité, et (ii) la pluralité de données prétraitées ;

modifier dynamiquement le modèle de commande et d'optimisation lorsqu'un écart entre une trajectoire estimée de l'ensemble de variables manipulées et une trajectoire de référence dépasse un second seuil prédéfini ; et

recommander un ensemble optimisé de variables manipulées au système de chromatographie continue pour optimiser le processus de chromatographie pour atteindre la spécification ciblée de la pluralité de variantes de charge de la pluralité de composants, et dans lequel l'ensemble optimisé de variables manipulées est obtenu en effectuant au moins l'une parmi (i) une optimisation statique et (ii) une optimisation dynamique.

7. Appareil selon la revendication 6, dans lequel la pluralité de données en temps réel est obtenue à partir d'un ou plusieurs instruments analytiques en ligne.

8. Appareil selon la revendication 6, dans lequel la trajectoire de l'ensemble de variables manipulées est estimée pour une période de temps d'un horizon de commande et de prédiction.

9. Appareil selon la revendication 6, dans lequel le modèle de commande et d'optimisation est modifié dynamiquement en effectuant au moins l'une parmi (i) la modification d'une fonction objective, (ii) le changement de valeurs d'une ou plusieurs contraintes, (iii) la réestimation d'une ou plusieurs tolérances, de critères de convergence et d'un ou plusieurs paramètres pertinents d'algorithme d'optimisation, et (iv) le choix d'un algorithme d'optimisation différent.

10. Appareil selon la revendication 6, configuré par les un ou plusieurs processeurs matériels pour :

surveiller une ou plusieurs propriétés d'une colonne de chromatographie en utilisant un module de suivi d'état de matériau ; et

déterminer une durée de vie restante d'un ou plusieurs matériaux dans la colonne de chromatographie et recommander une ou plusieurs actions correctives au système de chromatographie continue sur la base des une ou plusieurs propriétés surveillées.

11. Un ou plusieurs supports lisibles par ordinateur non transitoires comprenant une ou plusieurs instructions qui, lorsqu'elles sont exécutées par un ou plusieurs processeurs matériels, amènent :

la réception d'une pluralité de données relatives à un processus de chromatographie à une fréquence prédéterminée à partir d'un ou plusieurs sous-systèmes et d'une pluralité de sources de données en tant qu'entrée, dans lequel la pluralité de données comprend une pluralité de données en temps réel et une pluralité de données en temps non réel ;

le prétraitement de la pluralité de données reçues en utilisant une ou plusieurs techniques de prétraitement en temps réel, dans lequel les une ou plusieurs techniques de prétraitement effectuent au moins l'une parmi (i) l'identification et la suppression de valeurs aberrantes, (ii) l'imputation de données manquantes, et (iii) la synchronisation et l'intégration d'un sous-ensemble de la pluralité de données obtenues à partir d'un ou plusieurs capteurs physiques en utilisant leur fréquence, dans lequel l'étape de prétraitement identifie une variation de données entrantes en la comparant à des données de référence disponibles dans une pluralité de sous-bases de données ;

l'obtention d'un ensemble de données associé à une ou plusieurs variables d'une pluralité de variantes de charge d'une pluralité de composants à partir de la pluralité de données prétraitées en utilisant un ou plusieurs capteurs logiciels ;

la prédiction d'une valeur d'un ou plusieurs attributs de qualité à partir de l'ensemble de données associé aux une ou plusieurs variables de la pluralité de variantes de charge de la pluralité de composants ;

la surveillance d'un écart entre une valeur expérimentale et une valeur prédite des un ou plusieurs attributs de qualité, dans lequel la surveillance est effectuée sur la base d'une comparaison de la valeur prédite des un ou plusieurs attributs de qualité et des valeurs expérimentales des un ou plusieurs attributs de qualité ;

la mise à jour de manière adaptative du modèle de prédiction lorsque l'écart surveillé entre la valeur expérimentale et la valeur prédite des un ou plusieurs attributs de qualité dépasse un premier seuil prédéfini, dans lequel la première valeur de seuil est obtenue à partir d'une base de connaissances, dans lequel un auto-apprentissage du modèle de prédiction est effectué, si l'écart entre la valeur prédite et la valeur expérimentale dépasse le premier seuil prédéfini, dans lequel l'auto-apprentissage du modèle de prédiction est basé sur l'entraînement de modèles basés sur la physique existants à de nouvelles conditions de fonctionnement avec les données expérimentales collectées ;

l'optimisation d'un ensemble de variables manipulées à partir d'un ensemble de données d'entrée d'optimisation conformément à une spécification ciblée de la pluralité de variantes de charge de la pluralité de composants en utilisant un modèle de commande et d'optimisation, dans lequel l'ensemble de données d'entrée d'optimisation comprend (i) la valeur prédite des un ou plusieurs attributs de qualité, et (ii) la pluralité de données prétraitées ;

la modification dynamique du modèle de commande et d'optimisation lorsqu'un écart entre une trajectoire estimée de l'ensemble de variables manipulées et une trajectoire de référence dépasse un second seuil prédéfini ; et

la recommandation d'un ensemble optimisé de variables manipulées au système de chromatographie continue pour optimiser le processus de chromatographie pour atteindre la spécification ciblée de la pluralité de variantes de charge de la pluralité de composants, et dans lequel l'ensemble optimisé de variables manipulées est obtenu en effectuant au moins l'une parmi (i) une optimisation statique et (ii) une optimisation dynamique.

12. Procédé selon la revendication 1, dans lequel la pluralité de composants comprend des produits biothérapeutiques tels que des anticorps monoclonaux et leurs sous-produits obtenus après chromatographie par échange de cations, CEX, dans lequel l'ensemble de données associé aux une ou plusieurs variables de la pluralité de variantes de changement de la pluralité de composants comprend une courbe de percée de chromatographie de capture et de concentration de composants, dans lequel les un ou plusieurs capteurs logiciels obtiennent des données simulées non générées par les un ou plusieurs capteurs physiques, dans lequel les données simulées obtenues par les un ou plusieurs capteurs logiciels sont utilisées conjointement avec la pluralité de données prétraitées pour la commande et la surveillance.

13. Procédé selon la revendication 1, dans lequel les un ou plusieurs attributs de qualité comprennent l'efficacité de colonne, l'asymétrie de pic, la résolution et le facteur de queue d'un profil d'élution de chaque variante de charge de la pluralité de variantes de charge de la pluralité de composants, dans lequel à partir de la courbe de percée de la chromatographie de capture, la composition de différents composants de charge à l'élution de chromatographie de capture est déterminée, dans lequel des données de concentration de composants dans une charge de chromatographie par échange de cations, CEX, sont utilisées comme entrée dans le modèle de prédiction, dans lequel les données d'entrée reçues par le modèle de prédiction comprennent les données de concentration de charge de CEX provenant des un ou plusieurs capteurs logiciels, les dimensions de colonne de chromatographie, les propriétés de résine, la vitesse superficielle.

14. Procédé selon la revendication 1, dans lequel le modèle de commande et d'optimisation est utilisé pour prédire l'heure de début de pool, l'heure de fin, la vitesse de phase mobile selon une spécification ciblée de composition de variantes de changement dans un pool de chromatographie par échange de cations, CEX, et des profils d'élution obtenus pour chaque variante par le modèle de prédiction.

Apparatus 100

| Continuous chromatography system 102 | ⟷ | Chromatography control unit 104 |

Processor 112

I/O interface 108

Memory 106

System Database 114

Sub-systems 110

**FIG. 1**

FIG. 2

Receiving, via one or more hardware processors, a plurality of data pertaining to a chromatography process at a pre-determined frequency from one or more sub-systems and a plurality of data sources as input; wherein the plurality of data comprises a plurality of real time data and a plurality of non-real time data

302

Preprocessing, via the one or more hardware processors, the received plurality of data using one or more pre-processing techniques, wherein the one or more preprocessing techniques perform at least one of (i) identification and removal of outliers, (ii) imputation of missing data, and (iii) synchronization and integration of a subset of the plurality of data obtained from one or more physical sensors using their frequency

304

Obtaining, via one or more models executed by the one or more hardware processors, a set of data associated with one or more variables of a plurality of charge variants of a plurality of components from the plurality of preprocessed data using one or more soft sensors

306

Predicting, via a prediction model executed by the one or more hardware processors, value of one or more quality attributes from the set of data associated with the one or more variables of the plurality of charge variants of the plurality of components

308

Monitoring, via the one or more hardware processors, a deviation between an experimental value and predicted value of the one or more quality attributes

310

Adaptively updating, via the one or more hardware processors, the prediction model when the monitored deviation between the experimental value and the predicted value of the one or more quality attributes exceeds a first predefined threshold

312

300

**FIG. 3**

**FIG. 4A**

**FIG. 4B**

**FIG. 4C**

**FIG. 4D**

**Input to model:**

% Charge variants (acidic, main
and basic) of Protein A load from
online HPLC

| Prediction model | Control and Optimization model |

**Optimized values:**

1. Pool start and end time to meet the desired specification of charge variants in pool

**Implementable control action:** Trigger valve of chromatography system for product collection

| Chromatography system | Control algorithm |

**FIG. 5**

Flow rate

Pressure

Quality attributes

Loading profile

DBC predictor

Material condition tracker 202J

Resin age detector

CIP protocol selector

Remaining lifetime

CIP protocol

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321014227

**Non-patent literature cited in the description**

- **NIKITA SAXENA et al.** AI-ML applications in bioprocessing: ML as an enabler of real time quality prediction in continuous manufacturing of mAbs. *Computers & Chemical Engineering*, 03 July 2022, vol. 164, ISSN 0098-1354, 107896

- **NIKITA SAXENA et al.** Reinforcement learning based optimization of process chromatography for continuous processing of biopharmaceuticals updates. *Chemical Engineering Science*, vol. 230, ISSN 0009-2509, 116171